# EUROPÄISCHE PATENTSCHRIFT

(11) **EP 1 305 779 B1**
(45) Veröffentlichungstag und Bekanntmachung des Hinweises auf die Patenterteilung: **06.10.2004**
(21) Anmeldenummer: 01962722.3
(22) Anmeldetag: 07.06.2001
(51) Int. Cl.: G07F 11/00

(54) **VORRICHTUNG ZUR AUSGABE UND ANNAHME VON GEGENSTÄNDEN AUS BLATTFÖRMIGEM MATERIAL, INSBESONDERE VON BANKNOTEN, DOKUMENTEN UND DERGLEICHEN**
DEVICE FOR DISTRIBUTING AND RECEIVING ARTICLES IN THE FORM OF SHEETS OF PAPER, PARTICULARLY BANKNOTES, DOCUMENTS AND THE LIKE
DISPOSITIF POUR DISTRIBUER ET RECEVOIR DES OBJETS EN FORME DE FEUILLES, NOTAMMENT DES BILLETS DE BANQUE, DES DOCUMENTS ET DES OBJETS SIMILAIRES

(30) Priorität: 20.07.2000 DE 20012561 U
(43) Veröffentlichungstag der Anmeldung: 02.05.2003
(73) Patentinhaber: Möller, Andreas, 22850 Norderstedt (DE)
(72) Erfinder: Möller, Andreas, 22850 Norderstedt (DE)
(74) Vertreter: Patentanwälte Hauck, Graalfs, Wehnert, Döring, Siemons, Schildberg
(86) Internationale Anmeldenummer: PCT/EP2001/006493
(87) Internationale Veröffentlichungsnummer: WO 2002/009048

(56) Entgegenhaltungen:
- EP-A- 0 690 423
- WO-A-91/00578
- GB-A- 2 211 823
- US-A- 4 583 884

## Beschreibung

Die Erfindung betrifft eine Vorrichtung zur Ausgabe und Annahme von Gegenständen aus blattförmigem Material, insbesondere von Banknoten, Dokumenten und dergleichen.

Bei herkömmlichen Geldautomaten befinden sich die Geldscheine in einem abgesicherten Reservoir des Automaten. Da die Automaten teilweise im Außenbereich aufgestellt sind, besteht naturgemäß ein nicht unerhebliches Sicherheitsrisiko. Außerdem ist es für den Betreiber des Geldausgabeautomaten erforderlich, gelegentlich die Geldbestände aufzufüllen. Während dieser Zeit besteht ein erhöhtes Risiko.

DE 200 03 322.0 beschreibt in diesem Zusammenhang ein Fördersystem mit einem Förderrohr, durch das mit Hilfe eines luftgetriebenen Treibkörpers das Geld gefördert wird. Für den Zugriff auf das Geld ist eine verstellbare Ausgabetrommel mit einer Entnahmeöffnung vorgesehen.

Aus WO 91/00578 ist ein sicheres Verteilungssystem für Banknoten und Dokumente bekannt geworden. Das System besitzt einen Träger, der mit einem Fach zur Aufnahme von Banknoten und Dokumenten versehen ist. Befüllt wird dieses Fach durch einen Greifer, der Banknoten zangenartig umfaßt und in das Fach für den Transport absenkt. Zum Entleeren wird der Träger um seine Längsachse gedreht, so das der Inhalt unter Einwirkung der Schwerkraft aus diesem herausfällt.

Aus US 4,512,688 ist ein pneumatisches Rohrpostsystem mit einem zugehörigen Träger bekannt geworden. Bei dem Träger handelt es sich um ein kastenförmiges Element, das an seiner Oberseite mit einem klappbaren Deckel versehen ist. Der Deckel ist federvorgespannt und wird in dem Rohrkanal durch diesen in seiner geschlossenen Position gehalten. In einer Be- und Entladestation kann der Deckel des Trägers aufspringen.

Dokument EP0690423 offenbart ein pneumatisches Transportsystem mit einem zylindrischen Transportelement zur Beförderung von Bargeld, bei welchem ein Verschlußelement an das Transportelement montiert ist und welches sich somit zwischen einer Verschlußposition und einer geöffneten Position bewegen läßt.

Der Erfindung liegt die Aufgabe zugrunde, eine Vorrichtung zur Ausgabe und Annahme von Gegenständen aus blattförmigem Material zu schaffen, die einen sicheren Transport der Gegenstände in einem Rohrleitungssystem ermöglicht und zugleich eine einfache und zuverlässige Ausgabe und Annahme von Gegenständen gewährleistet.

Erfindungsgemäß wird die Aufgabe durch eine Vorrichtung mit den Merkmalen aus Anspruch 1 gelöst. Vorteilhafte Weiterbildungen der Erfindung finden sich in den Unteransprüchen.

Erfindungsgemäß besteht die Vorrichtung aus einem Träger, einer Empfangsund Sendevorrichtung und einem Schieber. Der Träger nimmt die zu fördernden Gegenstände auf und kann mit Hilfe von strömendem Gas in einem Rohr gefördert werden. Der Träger besitzt eine Aufnahme, in der die zu fördernden Gegenstand für den Transport angeordnet sind. Die Empfangs- und Sendevorrichtung ist mit einem Rohrabschnitt versehen, in dem der Träger sich zur Ausgabe und Annahme der Gegenstände befindet. Der Rohrabschnitt ist mit einer Öffnung versehen, durch die die Gegenstände in dem Träger angeordnet und aus diesem entnommen werden können. In dem Rohrabschnitt ist ein Anhaltemittel zum Anhalten des Trägers vorgesehen. Das Anhaltemittel hält den Träger in dem Rohrabschnitt an derart, daß der Träger mit der Öffnung des Rohrabschnitts ausgerichtet ist. Die in der Aufnahme des Trägers angeordneten Gegenstände werden über einen Schieber aus dem Träger heraus und in den Träger hinein transportiert. Der Träger ist mit mindestens einem quer zur Förderrichtung verlaufenden Kanal versehen. Der Schieber ist quer zur Förderrichtung verfahrbar und in seiner ausgefahrenen Position zwischen die Elemente des Trägers in den Kanal geschoben. Der Schieber weist an seinem freien Ende einen Halteabschnitt für die Gegenstände auf. In einer zurückgefahrenen Position gibt der Schieber den Träger frei, so daß dieser in dem Rohrabschnitt gefördert werden kann.

Führt der Schieber eine Verfahrbewegung aus der zurückgefahrenen Position in seine ausgefahrene Position aus, so wird ein in der Aufnahme des Trägers angeordneter Gegenstand mit dem Halteabschnitt des Schiebers erfaßt und durch die Öffnung vorgeschoben. Ein in dem Träger angeordneter Gegenstand wird über den Schieber aus dem Rohrabschnitt hinausgereicht und kann dort von einem Benutzer ergriffen werden. Bei der Annahme von Gegenständen erfolgt dieser Vorgang umgekehrt: Ein in dem Halteabschnitt des Schiebers gehaltener Gegenstand wird bei einer Verfahrbewegung des Schiebers aus seiner ausgefahrenen Position in seine zurückgefahrene Position durch die Öffnung des Rohrabschnitts hindurch, zwischen den Elementen des Trägers angeordnet. Hierbei löst der Schieber bei der Bewegung in seine vorgeschobene Position eine Bewegung der Elemente in ihre geöffnete Position aus. Die erfindungsgemäße Vorrichtung besitzt den Vorteil, daß Gegenstände, die mit dem Träger in einem Rohrsystem transportiert werden, durch den Schieber in zuverlässiger Weise ausgegeben und wieder angenommen werden können. Bei diesem Vorgang öffnet der Schieber den Träger.

In einer bevorzugten Weiterführung der Erfindung besitzen die Elemente jeweils mindestens eine dem anderen Element zugekehrte Aufnahmefläche. In einer Ausgestaltung sind die zu fördernden Gegenstände gegen die Annahmefläche des anderen Elements geklemmt, so daß während des Transports der Gegenstände diese zwischen die Elemente des Trägers geklemmt sind. Altemativ ist es auch möglich, daß die Aufnahmeflächen in der geschlossenen Position parallel zueinander angeordnet ein Aufnahmefach für die Gegenstände bilden.

Für eine effektive Förderung des Trägers in einem Rohrsystem ist jedes Element des Trägers mit einem im wesentlichen scheibenförmigen Körper ausgestattet, dessen eine Seite die Aufhahmefläche bildet und dessen gegenüberliegende Seite mit einem oder mehreren quer zur Förderrichtung stehenden Vorsprüngen versehen ist, wobei die Vorsprünge eine an den Rohrquerschnitt angepaßte Breite und Höhe aufweisen. Bei dieser Ausgestaltung des Trägers besteht der Träger im wesentlichen aus zwei separaten scheibenförmigen Körpern, die sich mit ihren jeweiligen Anlageflächen gegenüberliegen, und aus denen quer zur Förderrichtung ein Vorsprung vorsteht, dessen Höhe und Breite an den Querschnitt des Rohrabschnitts angepaßt ist, damit das strömende Gas diesen erfassen und fördern kann. Alternativ hierzu kann auch jeweils an dem in und an dem entgegen der Förderrichtung liegenden Ende des Träger ein Vorsprung vorgesehen sein.

Um eine effektive Förderung der Träger in dem Rohrsystem sicherzustellen, ist jeder Vorsprung entlang seinem zur Rohrwandung weisenden Umfang mit einem Dichtelement versehen. Das Dichtelement liegt an einer Rohrinnenwandung an und gewährleistet so einen hinreichend großen Druckunterschied des strömenden Gasmediums, um den Träger durch ein Rohr zu fördern.

Für eine Entnahme und Annahme von Gegenständen aus dem Förderelement sind beide Elemente mit dem quer zur Förderrichtung ausgerichteten Kanal zur Aufnahme des Schiebers versehen. Durch den Kanal wird der Zugang des Schiebers zu den in dem Träger angeordneten Gegenständen ermöglicht. Der Schieber verläuft in seiner ausgefahrenen Position durch den Träger ganz oder teilweise hindurch. Dabei ist der Kanal bevorzugt aus gegenüberliegenden Vertiefungen in jedem der Elemente gebildet. Die Vertiefung in einem ersten Element erstreckt sich vorzugsweise über die gesamte Breite quer zur Förderrichtung und die gegenüberliegende Vertiefung erstreckt sich über einen Teil der Breite des Elements und geht in einem rampenförmigen Abschnitt in die Aufnahmefläche des Elements über.

In einer bevorzugten Ausführung weist der Kanal an seiner zur Öffnung des Rohrabschnitts weisenden Seite den sich verjüngenden Querschnitt auf.

In einer bevorzugten Weiterfürung der erfindungsgemäßen Vorrichtung besitzt der Schieber eine oder mehrere Stangen, die in ihrem Halteabschnitt einen parallel zu der Aufnahmefläche liegenden Schlitz zur Aufnahme der Gegenstände aufweisen. Wird der Schieber aus seiner zurückgefahrenen Position durch den Träger geführt, nehmen die Schlitze den in dem Träger angeordneten Gegenstand auf. Wird der Schieber weiter vorgefahren, werden die in der Anlagefläche angeordneten Gegenstände von dem Schlitz aufgenommen und die von dem Schlitz aufgenommen Gegenstände werden aus dem Träger mitgefühlt, so daß sie durch die Öffnung in dem Rohrabschnitt von einem Benutzer ergriffen werden können. Bei der Annahme der Gegenstände können diese von dem Benutzer in dem Schlitz des Schiebers angeordnet werden. Auch können die Gegenstände in einem Fach abgelegt werden, aus dem dann der Schieber die Gegenstände mitnimmt. Diese Variante wird gegenüber einem direkten Einlegen bevorzugt. Werden die Gegenstände bei einem Zurückfahren des Schiebers mitgenommen, so verbleiben diese in dem Träger, wenn der Schieber aus dem Träger zurückgezogen wird.. Um die in dem Schlitz des Schiebers angeordneten Gegenstände bei einem Zurückziehen des Schiebers in dem Träger zu halten, kann an der von der Öffnung des Rohrabschnitts fortweisenden Seite ein Stoppelement an dem Träger vorgesehen sein. Insbesondere zur Absicherung der Gegenstände bei einem Zurückziehen des Schiebers, kann an dem freien Ende des Schlitzes eine Sicherung für die in dem Schlitz angeordneten Gegenstände vorgesehen sein.

In einer bevorzugten Ausgestaltung des Rohrabschnitts ist dessen Öffnung durch einen an dem Rohrabschnitt angelenkten Deckel verschließbar. Bevorzugt ist der Deckel bei herausgefahrenem Schieber aus seiner die Öffnung des Rohrabschnitts abdeckenden Position geklappt. Hierbei wird der Deckel über den sich öffnenden Träger durch den herausgefahrenen Schieber angehoben, so daß eine Entnahme oder Annahme von Gegenständen möglich ist.

In einer vorteilhaften Weiterführung der Erfindung ist der Rohrabschnitt mit Mitteln zur Erzeugung eines Gasstroms versehen. Hierdurch kann der Träger in dem Rohrabschnitt unabhängig von anderen Anschlüssen gefördert werden, wobei bevorzugt Mittel vorgesehen sind, um einen Gasstrom in beiden Richtungen des Rohrabschnitts zu erzeugen.

Bevorzugt ist der Träger mit einem Federmittel versehen, das die Elemente des Trägers in die geschlossene Stellung vorspannt, wobei bevorzugt die zu transportierenden Gegenstände zwischen die Elemente geklemmt sind.

Ein bevorzugtes Ausführungsbeispiel der erfindungsgemäßen Vorrichtung wird anhand der nachfolgenden Zeichnungen näher erläutert. Es zeigt:
- Fig. 1: eine perspektivische Ansicht einer erfindungsgemäßen Vorrichtung mit ausgefahrenem Schieber,
- Fig. 2: einen erfindungsgemäßen Träger in einer teilweise aufgeklappten Position,
- Fig. 3: die erfindungsgemäße Vorrichtung mit ausgefahrenem Schieber in einer Seitenansicht,
- Fig. 4: die erfindungsgemäße Vorrichtung mit ausgefahrenem Schieber von vorne,
- Fig. 5: die erfindungsgemäße Vorrichtung mit ausgefahrenem Schieber von oben und
- Fig. 6a bis 6c: den Träger mit unterschiedlich weit vorgeschobenem Schieber von vorne und in den Schnitten entlang der Linien A-A, B-B bzw. C-C.
- Fig. 7a und 7b: einen alternativen Träger mit zwei Vorsprüngen von vorne und in der Schnittansicht entlang der Linie B-B und
- Fig. 8: eine perspektivische Ansicht des alternativen Trägers.

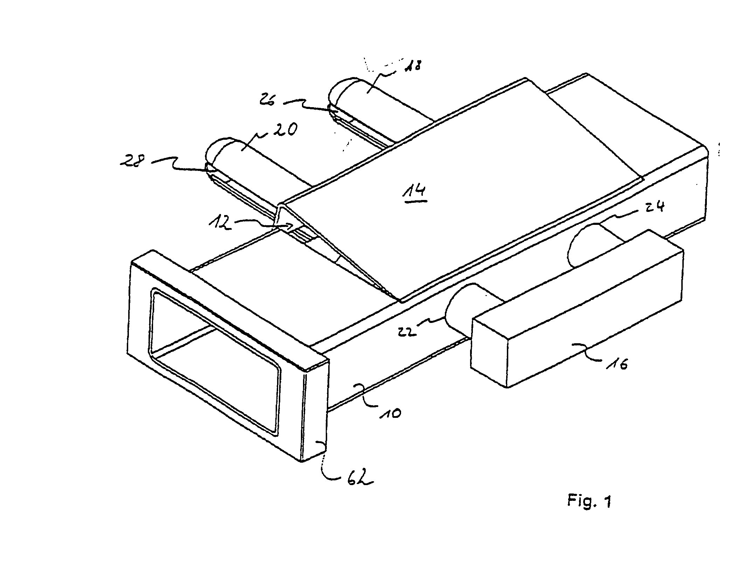

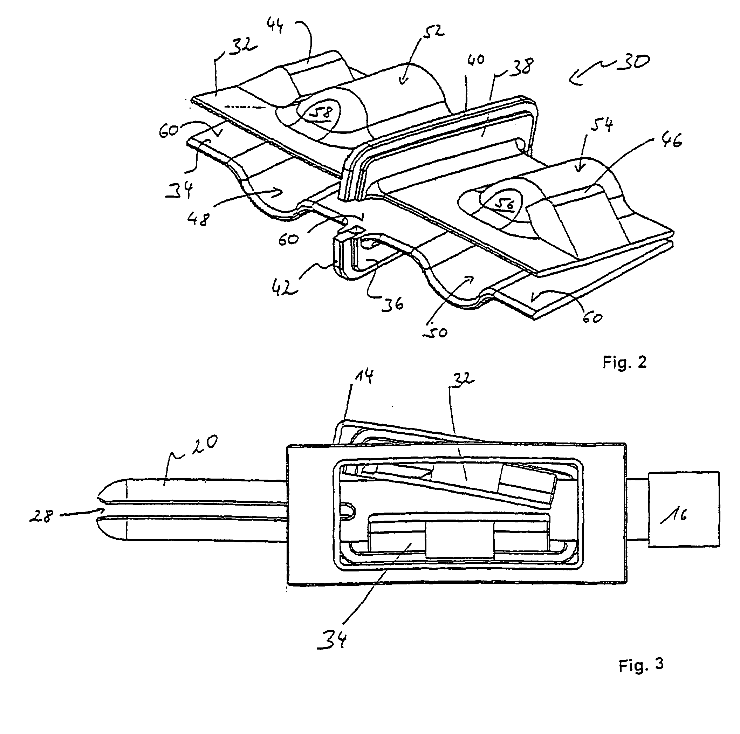

Fig. 1 zeigt einen Rohrabschnitt 10 mit einem im wesentlichen rechteckigen Querschnitt. Der Rohrabschnitt 10 besitzt eine seitliche Öffnung 12, die mit einem klappbaren Deckel 14 verschlossen werden kann. In dem Rohrabschnitt 10 wird ein Träger 30 (vgl. Fig. 2) durch Druckluft bewegt.

Quer zur Förderrichtung angeordnet ist ein Schieber 16, der zwei Arme 18 und 20 besitzt. In der in Fig. 1 dargestellten Position sind die Arme 18 und 20 durch den Rohrabschnitt 10 und die Öffnung 12 geführt. Der Rohrabschnitt 10 ist an seiner der Öffnung gegenüberliegenden Seite mit Bohrungen 22 und 24 für die Arme des Schiebers ausgestattet. Jeder Arm 18 und 20 ist mit einem Schlitz 26 bzw. 28 versehen, die parallel zueinander ausgerichtet sind. Die Arme 18 und 20 besitzen einen im wesentlichen runden Querschnitt, der sich zu dem freien Ende der Arme hin verjüngt.

In dem Rohrabschnitt angeordnet und durch den Deckel 14 verdeckt ist der Träger 30, wie er in Fig. 2 dargestellt ist. Der Träger 30 besteht aus zwei Elementen 32 und 34, die in Fig. 2 teilweise auseinandergeklappt dargestellt sind. Jedes Element besteht aus einem flachen im wesentlichen rechteckigen Körper, aus dem mittig je ein Vorsprung 36 bzw. 38 vorsteht. Die Vorsprünge sind derart dimensioniert, daß im zusammengeklappten Zustand des Trägers 30 sie dem Querschnitt des Rohrabschnitts 10 entsprechen. Um die Vorsprünge 36 und 38 herum läuft jeweils ein Dichtelement 40 und 42, das in eine um den Vorsprung laufende Nut gesteckt ist. Die Vorsprünge 36 und 38 sind ungefähr mittig in Bezug auf die Förderrichtung des Trägers angeordnet. Die Dichtelemente sind an der verdeckt dargestellten Seite miteinander verbunden, um einen Anschlag für die Gegenstände zu bilden.

Wird der Träger in einem Rohr mit rechteckigem Querschnitt gefördert, so bilden die Vorsprünge 36 und 38 den Widerstand an dem die Druckkraft angreift. Element 32 besitzt Anschläge 44 und 46, die jeweils an dem in Förderrichtung weisenden Ende des Trägers angeordnet sind. Die Anschläge 44 und 46 kommen bei einer entsprechenden Kurve des Rohres, in dem der Träger gefördert wird, zur Anlage an die Rohrinnenwandung. Hierdurch wird der Neigungswinkel des Trägers in der Kurve verkleinert, da einer der Anschläge 44 bzw. 46 an die Innenwandung des Rohrs stößt.

Element 34 besitzt zwei parallel zueinander angeordnete Vertiefungen 48 und 50 auf jeweils unterschiedlichen Seiten des Vorsprungs 36. Die Vertiefungen besitzen einen im wesentlichen halbkreisförmigen Querschnitt und erstrecken sich über die gesamte Breite des Elements 34. Gegenüberliegend zu den Vertiefungen 48 und 50 sind in dem Element 32 Vertiefungen 52 und 54 angeordnet. Die Vertiefungen 52 und 54 erstrecken sich über einen Teil des Elements 32 und münden jeweils in einen rampenförmigen Abschnitt 56 und 58, der in das Element 32 übergeht. Die Vertiefungen 48 und 52 bilden gemeinsam mit dem rampenförmigen Abschnitt 58 einen quer zur Förderrichtung verlaufenden Kanal, dessen Querschnitt sich verjüngt.

Das Zusammenspiel zwischen Arm 20 des Schiebers und dem Träger wird aus der Ansicht in Fig. 3 deutlich. Der vorgeschobene Arm 20 des Schiebers 16 verläuft zwischen den Elementen 32 und 34. An dem Arm 20 liegt der rampenförmige Abschnitt 56 an, so daß die Elemente 32 und 34 auseinandergeklappt sind. Der Deckel 14 wird durch das Element 32 aufgeklappt. Dabei kann der Deckel 14 federvorgespannt in seine verschlossene, den Rohrabschnitt abdichtende Position sein. Werden in der in Fig. 3 dargestellten Position Banknoten in den Schlitz 28 eingeführt, so werden sie bei einem Verfahren des Schiebers in die zurückgezogene Position mit in den Träger genommen. Gelangt die Stange 20 in die Vertiefung 54 des Elements 32 so schließt sich der Träger und die Banknoten sind zwischen die Flächen 60 des Elements 34 und die entsprechend gegenüberliegenden Flächen des Elements 32 geklemmt. Bei diesem Vorgang deckt der Deckel 14 die Öffnung 12 ab, so daß anschließend die Banknoten mit Hilfe des Trägers in dem Rohrabschnitt befördert werden können.

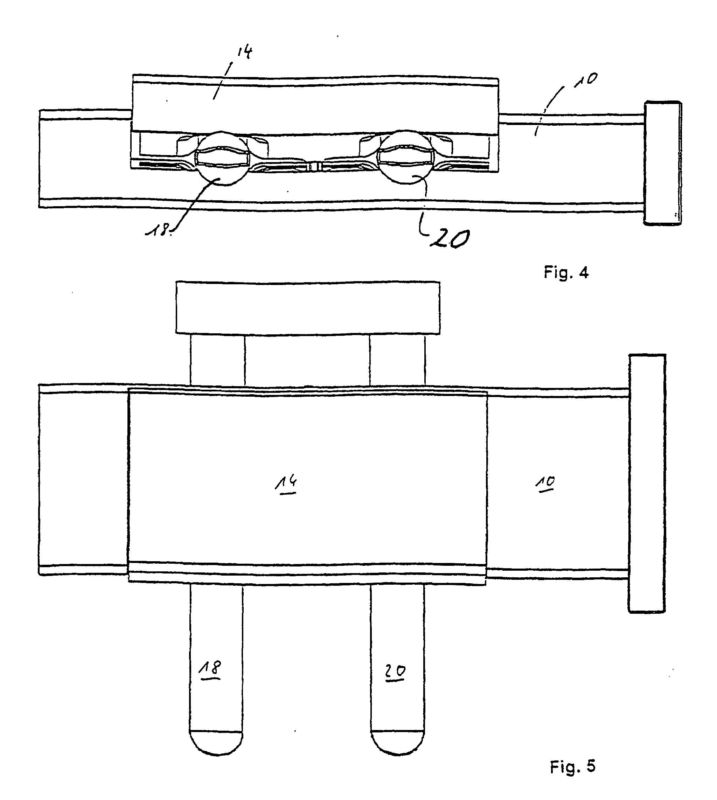

Die Figuren 4 und 5 zeigen die erfindungsgemäße Vorrichtung in einer Ansicht von vorne bzw. von oben. Die Ansicht von vorne verdeutlicht, daß die erfindungsgemäße Vorrichtung flach gebaut werden kann.

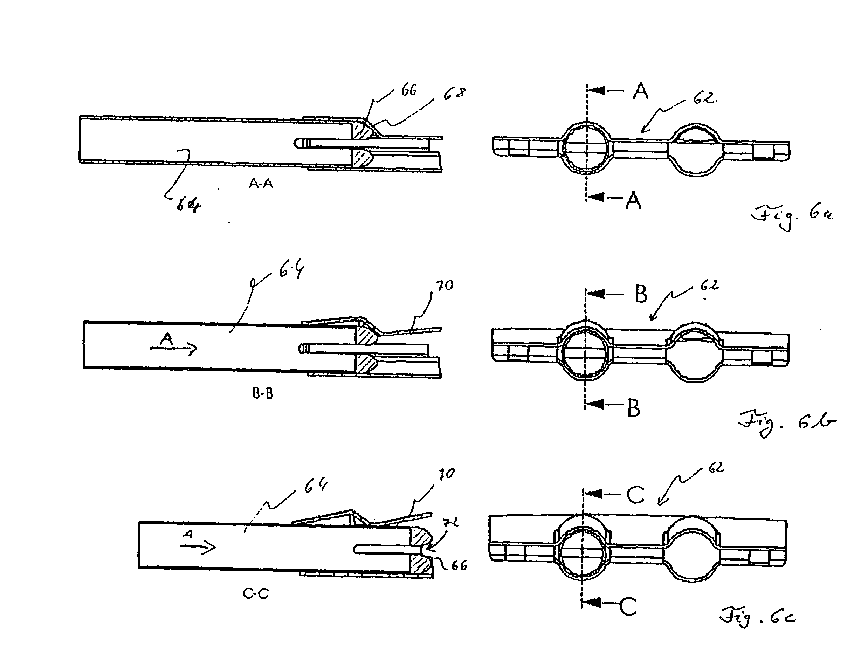

Die Figuren 6a bis 6c zeigen, wie der Träger sich während des Vorschiebens des Halteabschnitts öffnet. Zur besseren Übersicht sind an dem Träger 62 die quer zur Förderrichtung stehenden Vorsprünge nicht dargestellt. Der vorgeschobene Arm des Schiebers 64 kommt mit seinem Halteabschnitt 66 in Fig. 6a mit dem abgeschrägten Anlageabschnitt 68 in Kontakt. Durch ein weiteres Vorschieben in Richtung des Pfeils A in Fig. 6b wird das obere Trägerelement 70 aufgespreizt. Das angehobene Element 70 kann zu einem Anheben des klappbaren Deckels in dem Rohrabschnitt führen. Wird der Schieber weiter in Richtung A in Fig. 6c vorgeschoben, so öffnet sich das Element 70 weiter und zwischen den Elementen angeordnete Banknoten oder sonstige Dokumente werden vorgeschoben, damit sie von einem Benutzer ergriffen werden können. Bei einer Bewegung des Schieber 64 in Richtung des Pfeils A werden die in dem Träger 62 angeordneten Banknoten von dem Schlitz 72 des Anlageabschnitts 66 aufgenommen und in diesem für ein Ergreifen durch einen Benutzer vorgeschoben. Die Aufnahme von Banknoten erfolgt in der umgekehrten Reihenfolge durch ein Zurückziehen des Arms 64. Als Vorteil erweist es sich bei dem Halteabschnitt 64, daß nicht entnommene Dokumente oder Banknoten bei einem Zurückfahren automatisch wieder ordnungsgemäß in dem Trägerelement angeordnet werden und sicher zu einem entsprechenden Ort transportiert werden können.

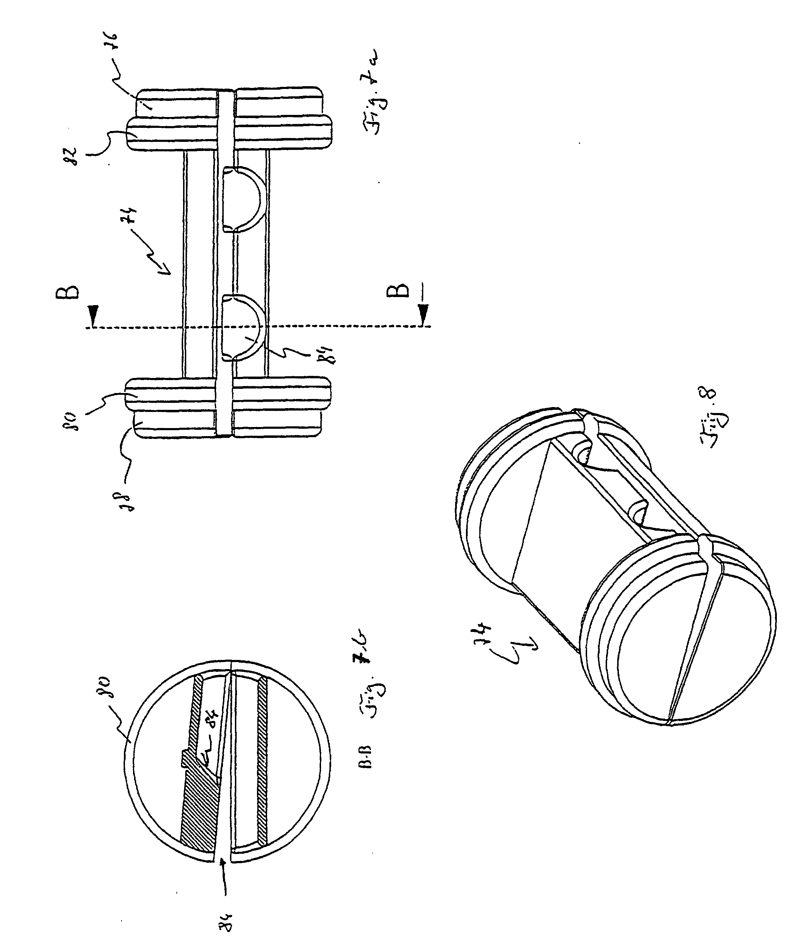

Fig. 7a und 7b zeigen einen alternativ ausgebildeten Träger 74, der mit zwei Vorsprüngen 76 und 78 zur Förderung in dem Rohr versehen ist. Die Vorsprünge 76 und 78 sind ebenfalls jeweils mit einer Gummidichtung 80 und 82 versehen. Der Träger 74 ist so ausgelegt, daß er entsprechende Büchsen in bereits bestehenden Rohrpostsystemen ersetzen kann. Hierdurch ist es möglich, den Träger bei bereits bestehenden Rohrpostsystemen mit ihren Weichen- und Fördereinrichtung einzusetzen.

Fig. 7b zeigt einen Schnitt entlang der Linie B-B in Fig. 7a. Der Schnitt verläuft durch einen Kanal 84, dessen Querschnitt sich an der Schräge 86 verjüngt. Der in den Kanal 84 geschobene Arm eines Schiebers wirkt mit der abgeschrägten Anlagefläche 84 zusammen, damit sich der Träger öffnet und zwischen den Trägerelementen angeordnete Geldscheine und Dokumente aus diesem herausgeschoben werden können.

Fig. 8 zeigte eine perspektivische Ansicht des Träger 74 aus Fig. 7a.

Sowohl der Träger 74 als auch der Träger 30 können mit Federmitteln versehen sein, die den Träger in seine verschlossene Position vorspannen. In der verschlossenen Position sind die zu transportierenden Gegenstände bevorzugt zwischen den beiden Trägerelementen eingeklemmt.

## Patentansprüche

1. Vorrichtung zur Ausgabe und Annahme von Gegenständen aus blattförmigem Material, insbesondere von Banknoten, Dokumenten und dergleichen, mit
- einem Träger (30) für die Gegenstände, der mit Hilfe von strömendem Gas in einem Rohr gefördert werden kann und der zwei relativ zueinander bewegliche Elemente (32, 34) besitzt, die in ihrer geschlossenen Stellung die Gegenstände in der Aufnahme sichern und in ihrer geöffneten Stellung einen Transport der Gegenstände in und aus der Aufnahme gestatten,
- einer Empfangs- und Sendevorrichtung mit einem Rohrabschnitt (10), in dem sich der Träger zur Ausgabe und Annahme der Gegenstände befindet und der mit einer seitlichen, durch Verschließmittel verschließbaren Öffnung versehen ist, wobei die verstellbaren Verschließmittel in der Schließstellung den Rohrabschnitt weitgehend luftdicht verschließen und der Rohrabschnitt mit einem Anhaltemittel zum Anhalten und Ausrichten des Trägers relativ zu der seitlichen Öffnung versehen ist, **gekennzeichnet durch**
- einen Schieber (16) zum Transport der Gegenstände aus dem Träger heraus und in den Träger hinein, wobei der Schieber relativ zu dem Rohrabschnitt bewegbar zwischen einer zurückgezogenen Position und einer ausgefahrenen Position gelagert und mit einem Halteabschnitt (28) zur Aufnahme und zum Halten der Gegenstände versehen ist,
wobei der Schieber in seiner ausgefahrenen Position in den Kanal mit dem Halteabschnitt vorsteht und eine Bewegung der Elemente des Trägers in ihre geöffnete Stellung auslöst.
- die zwei relativ zueinander beweglichen Elemente (32,34), die eine Aufnahme für die zu fördernden Gegenstände sowie mindestens einen quer zur Förderrichtung verlaufenden Kanal (48, 50) bilden.

2. Vorrichtung nach Anspruch 1, **dadurch gekennzeichnet, daß** die Elemente jeweils mindestens eine dem anderen Element zugewandte Annahmefläche (60) aufweisen.

3. Vorrichtung nach Anspruch 2, **dadurch gekennzeichnet, daß** jedes Element des Trägers einen im wesentlichen scheibenförmigen Körper besitzt, dessen eine Seite die Aufnahmefläche bildet und an dessen gegenüberliegenden Seiten ein oder mehrere an den Rohrquerschnitt angepaßte Vorsprünge (38) vorgesehen sind.

4. Vorrichtung nach Anspruch 3, **dadurch gekennzeichnet, daß** ein Vorsprung (38) in Förderrichtung mittig angeordnet ist.

5. Vorrichtung nach einem der Ansprüche 2 bis 7, **dadurch gekennzeichnet, daß** der Kanal durch paarweise einander gegenüberliegende Vertiefungen in den Elementen des Träger mit einem sich zu einer Seite hin verjüngenden Querschnitt gebildet ist.

6. Vorrichtung nach Anspruch 5, **dadurch gekennzeichnet, daß** die Vertiefung in einem ersten Element sich über die gesamte Breite quer zur Förderrichtung erstreckt, wobei die gegenüberliegende Vertiefung in dem zweiten Element sich über einen Teil der Breite des Elements erstreckt und mit einem rampenförmigen Abschnitt in die Aufnahmefläche des zweiten Elements übergeht.

7. Vorrichtung nach Anspruch 6, **dadurch gekennzeichnet, daß** der in den Kanal vorgeschobene Schieber an dem rampenförmigen Abschnitt des zweiten Elements anliegt derart, daß das zweite Element aufgespreizt wird und das zweite Element die Verschließmittel der Öffnung betätigt.

8. Vorrichtung nach einem der Ansprüche 1 bis 7, **dadurch gekennzeichnet, daß** der Schieber eine oder mehrere Stangen aufweist, deren Halteabschnitt jeweils mit einem parallel zu der Aufnahmefläche der beiden Elemente liegenden Schlitz zur Aufnahme der Gegenstände als Halteabschnitt versehen ist.

9. Vorrichtung nach einem der Ansprüche 1 bis 8 , **dadurch gekennzeichnet, daß** die Verschließmittel der Öffnung des Rohrabschnitts einen an dem Rohrabschnitt angelenkten Deckel aufweisen.

10. Vorrichtung nach einem der Ansprüche 1 bis 9, **dadurch gekennzeichnet, daß** der Rohrabschnitt mit Mitteln zur wahlweisen Erzeugung eines Gasstroms in beiden Förderrichtungen versehen ist.

11. Vorrichtung nach einem der Ansprüche 1 bis 10, **dadurch gekennzeichnet, daß** der Träger ein Federmittel aufweist, das die Elemente in die geschlossene Stellung vorspannt.

12. Vorrichtung nach Anspruch 11, **dadurch gekennzeichnet, daß** die zu transportierenden Gegenstände in der geschlossenen Position zwischen die Aufnahmefläche der Elemente geklemmt sind.

## Claims

1. An apparatus for the delivery and reception of articles made of a sheet-like material, particularly banknotes, documents, and the like, comprising:
- a carrier (30) for the articles which can be conveyed in a tube by means of a flowing gas and has two elements (32, 34) movable relative to each other which, when in their closed position, secure the articles in the receptacle and, when in their opened position, enable the articles to be transported into and out of the receptacle,
- a reception and dispatch device having a tube portion (10) in which the carrier for the delivery and reception of the articles is located and which is provided with a lateral opening adapted to be closed by closing means with the adjustable closing means, when in the closing position, closing the tube portion in a largely air-tight manner and the tube portion is provided with a stop means for stopping and orienting the carrier relative to the lateral opening, **characterized by**
- a slide (16) for transporting the articles out of the carrier and into the carrier wherein the slide is movably supported relative to the tube portion between a retracted position and an extracted position and is provided with a retaining portion (28) for receiving and retaining the articles with the slide, when in its extracted position, extending its retaining portion into the channel and causing the elements of the carrier to move into their open position,
- the two elements (32, 34) being movable relative to each other and forming a receptacle for the articles to be conveyed and at least one channel (48, 50) extending transversely to the direction of conveyance.

2. The apparatus as claimed in claim 1, **characterized in that** the elements each have at least one reception surface (60) which faces the other element.

3. The apparatus as claimed in claim 2, **characterized in that** each element of the carrier has a body substantially of a disk shape one side of which defines the reception surface and on the opposite sides one of which more protrusions (38) are provided which are adapted to the tube cross-section.

4. The apparatus as claimed in claim 3, **characterized in that** one protrusion (38) is centrally disposed in the direction of conveyance.

5. The apparatus as claimed in any one of claims 2 to 7, **characterized in that** the channel is defined by indentations opposed to each other by pairs in the elements of the carrier with the channel cross-section tapering towards one side.

6. The apparatus as claimed in claim 5, **characterized in that** the indentation in a first element extends across the whole width transversely to the direction of conveyance with the opposite indentation in the second element extending over some part of the width of the element and, in a ramp-shaped portion, passes over into the reception surface of the second element.

7. The apparatus as claimed in claim 6, **characterized in that** the slide, when advanced into the channel, bears on the ramp-shaped portion of the second element such that the second element is spread apart and the second element actuates the closing means for the opening.

8. The apparatus as claimed in any one of claims 1 to 7, **characterized in that** the slide has one or more bars the retaining portion of which is provided each with a slot disposed in parallel with the reception surface of the two elements for accepting the articles in the retaining portion.

9. The apparatus as claimed in any one of claims 1 to 8, **characterized in that** the closing means for the opening of the tube portion have a lid which is hinged to the tube portion.

10. The apparatus as claimed in any one of claims 1 to 9, **characterized in that** the tube portion is provided with means for selectively producing a flow of gas in either direction of conveyance.

11. The apparatus as claimed in any one of claims 1 to 10, **characterized in that** the carrier has a spring means which biases the elements into the closed position.

12. The apparatus as claimed in claim 11, **characterized in that** the articles to be transported, in the closed position, are locked between the reception surfaces of the elements.

## Revendications

1. Dispositif pour distribuer et recevoir des objets en forme de feuilles, notamment des billets de banque, des documents et des objets similaires, comportant :
- une cartouche de transport (30) pour lesdits objets pouvant être convoyée à l'aide d'un flux gazeux dans une conduite et comprenant deux éléments mobiles l'un par rapport à l'autre (32, 34), lesdits éléments mobiles enfermant lesdits objets dans leur position fermée et permettant l'insertion desdits objets dans ladite cartouche et leur extraction de celle-ci dans leur position ouverte ;
- un dispositif d'envoi et de réception comprenant une section de conduite (10) dans laquelle est placée la cartouche de transport pour l'extraction et l'insertion desdits objets et pourvu d'une ouverture latérale verrouillable par des dispositifs de verrouillage, de telle sorte que ladite section de conduite est essentiellement hermétique en position fermée des dispositifs de verrouillage réglables et est pourvue d'un dispositif de placement et d'alignement de ladite cartouche de transport par rapport à ladite ouverture latérale ;
**caractérisé par** :
- un tiroir (16) pour l'extraction ou l'insertion desdits objets de ladite cartouche de transport se déplaçant relativement à ladite section de conduite entre une position engagée et une position désengagée et comprenant une section de saisie (28) pour la réception et la saisie desdits objets, de telle sorte que ledit tiroir sort du canal logeant ladite section de saisie en position engagée et provoque un déplacement desdits éléments mobiles de ladite cartouche de transport vers leur position ouverte, les deux dits éléments mobiles l'un par rapport à l'autre (32, 34) permettant le placement desdits objets à transporter et constituant au moins un canal (48, 50) transversal par rapport à l'axe de transport.

2. Dispositif selon la revendication 1, **caractérisé en ce que** lesdits éléments mobiles présentent toujours au moins une surface de placement (60) orientée vers l'élément mobile complémentaire.

3. Dispositif selon la revendication 2, **caractérisé en ce que** chaque élément de ladite cartouche de transport possède une structure essentiellement plane, dont une face constitue la surface de placement et dont la face opposée présente une ou plusieurs nervures (38) adaptées à la section de ladite conduite.

4. Dispositif selon la revendication 3, **caractérisé en ce qu'**une desdites nervures (38) est disposée en position centrale selon la direction de transport.

5. Dispositif selon une des revendications 2 à 4, **caractérisé en ce que** ledit canal est constitué de deux gorges complémentaires opposées desdits éléments mobiles de ladite cartouche de transport, ledit canal présentant une section décroissante d'un côté.

6. Dispositif selon la revendication 5, **caractérisé en ce que** ladite gorge du premier desdits éléments mobiles s'étend sur toute la largeur, transversalement par rapport à la direction de transport, de telle sorte que la gorge opposée du deuxième desdits éléments mobiles s'étend sur une partie de la largeur dudit deuxième élément et forme ensuite une rampe de section décroissante jusqu'à atteindre la surface de placement dudit deuxième élément.

7. Dispositif selon la revendication 6, **caractérisé en ce que** ledit tiroir, lorsqu'il est en position engagée dans ledit canal, s'appuie contre ladite rampe dudit deuxième élément de telle sorte que ledit deuxième élément est écarté et actionne l'ouverture desdits dispositifs de verrouillage.

8. Dispositif selon une des revendications 1 à 7, **caractérisé en ce que** ledit tiroir comporte une ou plusieurs barres possédant chacune une section de saisie comprenant une fente parallèle à ladite surface de placement des deux dits éléments mobiles, ladite fente permettant de recevoir lesdits objets.

9. Dispositif selon une des revendications 1 à 8, **caractérisé en ce que** lesdits dispositifs de verrouillage desdites sections de conduite présentent un couvercle associé à ladite section de conduite.

10. Dispositif selon une des revendications 1 à 9, **caractérisé en ce que** ladite section de conduite comporte des moyens de sélection de la génération d'un flux gazeux dans une direction de l'axe de transport ou dans l'autre.

11. Dispositif selon une des revendications 1 à 10, **caractérisé en ce que** ladite cartouche de transport comporte un dispositif à ressort précontraignant lesdits éléments mobiles en position fermée.

12. Dispositif selon la revendication 11 **caractérisé en ce que** lesdits objets à transporter sont comprimés entre lesdites surfaces de placement en position fermée.
